## Europäisches Patentamt
## European Patent Office
## Office européen des brevets

(19)

(11) Publication number: **0 076 753**
**B1**

(12) # EUROPEAN PATENT SPECIFICATION

(45) Date of publication of patent specification: **19.03.86**

(51) Int. Cl.⁴: **B 60 T 13/46**

(21) Application number: **82401787.5**

(22) Date of filing: **30.09.82**

(54) Control valve for a brake booster.

(30) Priority: **02.10.81 US 307919**

(43) Date of publication of application:
**13.04.83 Bulletin 83/15**

(45) Publication of the grant of the patent:
**19.03.86 Bulletin 86/12**

(84) Designated Contracting States:
**DE FR GB IT**

(56) References cited:
**EP-A-0 035 370**
**DE-B-1 913 518**
**GB-A-2 070 707**
**US-A-3 977 299**
**US-A-4 237 770**

(73) Proprietor: **ALLIED CORPORATION**
**Columbia Road and Park Avenue P.O. Box 2245R (Law Dept.)**
**Morristown New Jersey 07960 (US)**

(72) Inventor: **Kytta, Oswald O.**
**1833 N. O'Brien St.**
**South Bend Indiana 46628 (US)**

(74) Representative: **Huchet, André et al**
**Service Brevets Bendix 44, rue François 1er**
**F-75008 Paris (FR)**

Courier Press, Leamington Spa, England.

EP 0 076 753 B1

## Description

The present invention relates to a control valve for use in a fluid pressure operated brake booster.

In such brake boosters, the control valve in a first mode of operation establishes a communication of fluid through a hub from a first source of fluid to both sides of a movable wall that separates a cavity in a housing into first and second chambers, and in a second mode of operation communicates fluid from a second source to the second chamber to create a pressure differential across the movable wall. The pressure differential acts on the movable wall to produce an output force corresponding to a force applied to an input member to operate the control valve in the second mode.

In an effort to reduce the overall dimension of the control valve, US—A—4 237 770 teaches that the movable element of the control valve may consist of a resilient disc which controls the communication of fluid between first and second chambers to develop an operational pressure differential in response to an operator input.

However, the plunger which carries the movable seat for the control valve is still retained within the hub through a retention key engaged into a slot provided in the hub, which limits the reduction in size of the control valve.

A further reduction in size can be obtained if, as taught by GB—A—2 070 707 which discloses a brake booster with a control valve in accordance with the pre-characterising part of claim 1 using a conventional poppet-like movable member, the control valve includes a rigid retainer in the form of a sleeve which is press-fitted into the hub and engages at one end thereof a peripheral surface of said poppet member to sealingly compress same against a shoulder in the hub bore. This same end of the sleeve further terminates into a radial flange portion which serves as a seat for a spring urging the input member toward a retracted position corresponding to the first mode of operation.

A similar construction is shown in DE—B2—1 913 518, in which the radial flange portion at the end of the sleeve further serves as a seat for a second spring which urges the poppet member against one or the other of the control valve seats, depending upon the mode of operation of the brake booster.

Starting from this state of the art, it is an object of the present invention to improve the attachment of the valve retainer to the hub so as to permit easy disassembling and removal of its elements for inspection or replacement purposes.

This object is achieved by a control valve for use in a fluid pressure operated motor having a housing the inner cavity of which is divided by a movable wall assembly into a first variable volume chamber connected to a first source of fluid and a second variable volume chamber, a hub connected to said movable wall assembly having a projection with a bore therein that extends through the housing, and a control valve located in said bore and responsive to a force applied to an input member for connecting the second chamber to the first chamber in a first mode of operation and to a second source of fluid in a second mode of operation whereby a pressure differential develops across the movable wall assembly and an output force is produced, said control valve comprising a fixed seat formed within the bore, a movable seat formed on an end face of a plunger connected to the input member, and a resilient member having a peripheral surface sealingly engaging a shoulder in the bore, a central opening through which the input member projects, and at least one rib adapted to cooperate with said seats for establishing either the first or the second mode of operation, said control valve further including a rigid retainer consisting of a sleeve engaged into the bore and attached to the projection of the hub for holding the peripheral surface of the resilient member in compressive abutment against the associated shoulder, thanks to the fact that the sleeve terminates at its end opposite said resilient member in a radial flange which itself engages the end of the projection of the hub and carries locking means cooperating with said projection to hold the retainer in a fixed position.

In a preferred embodiment, the locking means include tabs adapted to snap into a corresponding groove formed on the projection of the hub adjacent its end.

These and other features of the invention will become readily apparent from reading the following description of a preferred embodiment, given by way of example only, and with reference to the accompanying drawings in which:

Figure 1 is a sectional view of a fluid pressure operated motor having a valve therein made according to the principles of this invention;

Figure 2 is a perspective view of the retainer that holds the disc and plunger in the bore of the hub of Figure 1;

Figure 3 shows another embodiment of a retainer for holding a disc and plunger in the bore of the hub of Figure 1;

Figure 4 shows a still further embodiment of a retainer for holding a disc and plunger in the bore of the hub of Figure 1; and

Figure 5 is a sectional view of the retainer of Figure 4.

The fluid pressure motor 10 has a first shell 12 joined to a second shell 14 by a closure arrangement 16 such as disclosed, for instance, in U.S. Patent No. 3,977,299. A diaphragm 18, which has a first bead held by the closure arrangement 16 formed by the shoulder 20 on the first shell 12 and peripheral surface 22 on the second shell 14, has a second bead 24 located in a groove 26 on a hub 28 to position a plate 30 against a shoulder 32. The plate 30, diaphragm 18 and hub 28 divide the interior of the first and second shells 12 and 14 into a first chamber 34 and a second chamber 36.

The hub 28 has a stepped bore 38 therethrough which is connected to the first chamber 34 by a first passage 40 and to the second chamber 36 by a second passage 42. A valve arrangement 44, which is located in bore 38, controls the flow communication between the first and second chambers 34 and 36, respectively, through the first and second passages 40 and 42.

The valve arrangement 44 is connected to an input push rod 56 through a plunger 58. Plunger 58 has a face 60 which engages a reaction disc 62 located in bore 38 to provide an operator with a feedback force corresponding to the output force being transmitted from the fluid pressure motor through an output push rod 64.

In more particular detail, the valve arrangement 44 includes a disc 46 of the type disclosed in U.S. Patent No. 4,237,770, the plunger 58, a retainer 70, first and second springs 66 and 74, and push rod 56.

Disc 46 has a peripheral surface 48 that engages bore 38 and shoulder 76, and a central opening 50. Ribs 52 and 54 extend from the central opening 50 toward the peripheral surface 48. Rib 52 functions as both the atmospheric and vacuum seat while rib 54 is both a spring seat and a stop surface. Shoulder 76 has a taper thereon that substantially matches surface 80 on a bead 78 formed at the periphery of disc 46.

The retainer 70 includes a sleeve or cylindrical body 82 that forms an interference fit with bore 38. The first end of the cylindrical body 82 has an inwardly projecting lip with slanting section 84 that matches a surface 86 on bead 78 of disc 46. At a point adjacent the end of bead 78, surface 84 on lip reverses to form a first cone 88 that projects rearwardly from the first end toward the second end. The apex 90 of cone 88 occurs at about midway into the bore 38 and again reverses direction to establish a second cone 92 that extends toward the first end to define a stop 94.

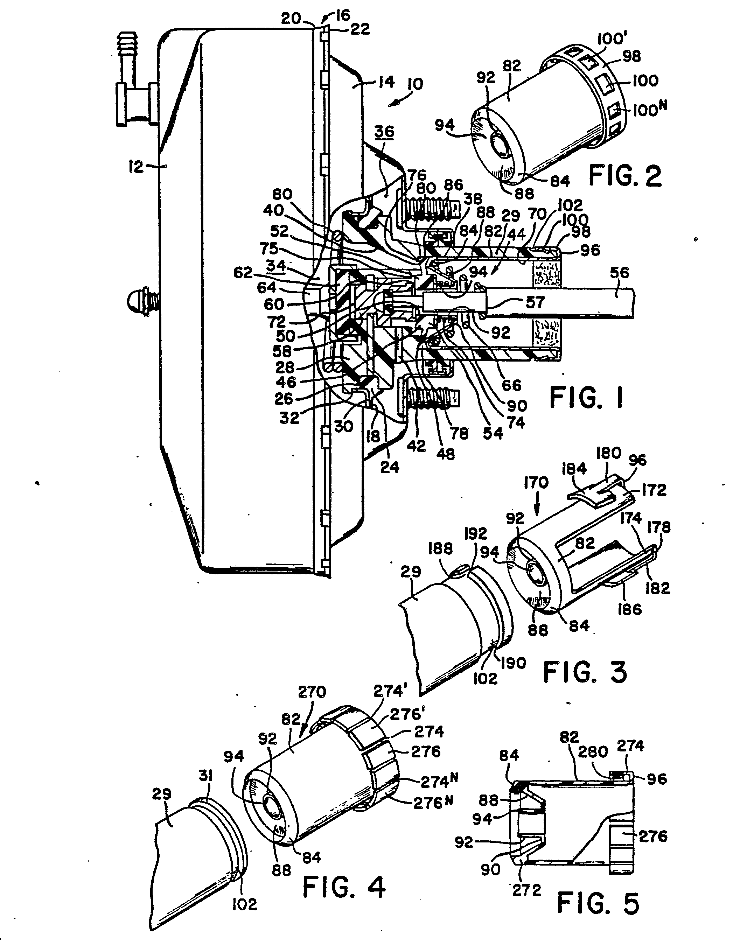

The second end of the sleeve or cylindrical body 82 has a flange 96 that projects radially to a point and then is joined with a cylindrical section 98. A series of tabs 100, 100′ . . . $100^N$ as best shown in figure 2, located on cylindrical section 98, extend into a groove 102 on projection 29 of hub 28 to compress bead 78 between surface 84 and shoulder 76. The first cone 88 acts as a guide to assist in locating spring 66 between section 84 on the lip of sleeve 82 and a shoulder 57 on push rod 56. While the apex 90 between the first and second cones 88 and 92 aligns spring 74 with surface 54 on disc 46.

The above described device operates as follows:

The fluid pressure motor 10 is normally installed as a power assist device in the brake system of a vehicle. When such a vehicle is operating, a first fluid, normally the vacuum produced at the intake manifold, is communicated to the first chamber 34. Thereafter, the fluid in pressure motor 10 is evacuated by flowing from the second chamber 36 through the second passage 42, bore 38, the first passage 40 and the first chamber 34 to suspend the movable diaphragm 18 and backing plate 30 in the first fluid. Thus, return spring 80 urges the hub 28 toward shell 14.

In the first mode of operation, as shown in Figure 1, there is no input applied to push rod 56. Thus, return spring 66 holds plunger face 60 against rib 52 to seal the flow path between the first and second passages 40 and 42 from being exposed to a second fluid, air at atmospheric pressure, in bore 38. Rib 54 on disc 46 engages stop 94 to limit the rearward movement of plunger 58 by return spring 66. The second fluid (air) in bore 38 and the first fluid (vacuum) in the first passage 40 create a pressure differential across disc 46 that assists spring 74 in urging the face on rib 52 into engagement with face 60 on plunger 58 to reinforce the seal between bore 38 and the flow path between the first and second passages 40 and 42.

When an operator desires to effect a brake application, an input force acts on push rod 56 to move plunger 58 toward the reaction disc 62. The internal resiliency of the disc 46 and the pressure differential thereacross and spring 74 move rib 52 with face 60 until rib 52 engages seat 75. Thereafter, plunger 58 moves away from rib 52 and allows the second fluid to flow into the second passage 42 for distribution to the second chamber 36. With the second fluid, air at atmospheric pressure, in the second chamber 36 and the first fluid, air reduced to the level of the vacuum produced at the intake manifold or vacuum produced by an air pump, in the first chamber 34, a pressure differential is created across the diaphragm 18 and backing plate 30. This pressure differential acts on the diaphragm 18 and backing plate 30 to develop an operational force corresponding to the input force that is transmitted to the output push rod 64 by way of hub 28 and reaction disc 62. The resistance to movement of push rod 64 is carried through reaction disc 62 and into plunger 58 to provide the operator with an indication of the operational force supplied to the push rod 64.

On termination of the input force, return spring 66 acts on push rod 56 to move face 72 on plunger 58 out of engagement with reaction disc 62 and face 60 into engagement with rib 52 to interrupt flow communication of the second fluid through the axial opening 50. Thereafter, rib 52 moves away from seat 75 to re-establish flow communication between the first passage 40 and the second passage 42 through bore 38. With flow communication unrestricted between the first passage 40 and the second passage 42, the second fluid in chamber 36 is evacuated by the first fluid to suspend the diaphragm 18 and backing plate 30 in the first fluid and allow return spring 80 to move hub 28 toward shell 14. Thereafter, the diaphragm 18 and hub 28 assume a position as shown in Figure 1 until the operator again applies an input force to push rod 56.

Thus, the operation of fluid pressure motor 10 by valve 44 is achieved through sequential movement away from seat 75 by spring 66 acting through push rod 56 and plunger 58 to provide free communication between the first and second chambers and through the internal resiliency of the disc and spring 74 aided by any pressure differential between the first fluid and the second fluid to seat the face of rib 52 on seat 75, and seal the first passage 40 from the bore 38. With passage 40 sealed, the second fluid is communicated to the second chamber whereby a fluid pressure differential is developed to produce the output force transmitted through push rod 64.

Thus, the cylindrical retainer 70 performs the dual function of holding and locating the disc 46 in a fixed position within bore 38 in addition to establishing the rest position of plunger 58 in bore 38.

The groove formed by cylindrical member 82, flange 96 and cylindrical section 98 covers the free end of projection 29 to provide protection against damage.

In order to conserve material and reduce the total weight of the servomotor 10, the structure of the retainer 70 may be modified in a manner as shown in figure 3 for retainer 170.

In retainer 170, the cylindrical body 82 has a pair of arms 172 and 174 extending therefrom. Flanges 96 and 178 attached to arms 172 and 174, respectively, have projections 180 and 182 to which tabs 184 and 186 are attached. Projection 29 on hub 28 has slots 188 and 190 that extend from the end 192 to groove 102. When the cylindrical body 82 is located in the bore of projection 29, projections 180 and 182 are located in slots 188 and 190, respectively, and tabs 184 and 186 snap into groove 102 to lock or attach retainer 170 thereto. The operation of the valve arrangement is identical whether retainer 70 or retainer 170 is used in the servomotor 10.

While it is anticipated that the retainers 70 and 170 would be stamped out of metal, it may be desirable to make a retainer out of a plastics material through molding. The retainer 270 shown in Figure 4 illustrates such a plastic or molded retainer. Because of the elastic properties of plastic it is necessary for the end 272 as best shown in Figure 5 to be reinforced. In addition axial slots 274, 274' . . . 274$^N$ are cut between tabs 276, 276' . . . 276$^N$. When cylinder 82 is inserted in the bore of projection 29 on hub 28, tabs 276, 276' . . . 276$^N$ flex about flange connections to allow nibs 280, only one of which is shown, to move over rib 31 before snapping into groove 102 to lock the retainer 270 in place. Since the material in hub 28 and retainer 270 could be constructed from the same plastics any expansion force which may occur because of the operating conditions encountered by the servomotor 10 would be reduced or eliminated. However, for most purposes, the metal retainers 70 and 170, because of their ease in manufacture, would appear to be the type utilized for most applications.

## Claims

1. A control valve (44) for use in a fluid pressure operated motor having a housing (12, 14) the inner cavity of which is divided by a movable wall assembly (18, 30) into a first variable volume chamber (34) connected to a first source of fluid and a second variable volume chamber (36), a hub (28) connected to said movable wall assembly having a projection (29) with a bore (38) therein that extends through the housing, and a control valve (44) located in said bore and responsive to a force applied to an input member (56) for connecting the second chamber (36) to the first chamber (34) in a first mode of operation and to a second source of fluid in a second mode of operation whereby a pressure differential develops across the movable wall assembly and an output force is produced, said control valve (44) comprising a fixed seat (75) formed within the bore (38), a movable seat (60) formed on an end face of a plunger (58) connected to the input member (56), and a resilient member (46) having a peripheral surface (48) sealingly engaging a shoulder (76) in the bore (38), a central opening (50) through which the input member (56) projects, and at least one rib (52) adapted to cooperate with said seats for establishing either the first or the second mode of operation, said control valve (44) further including a rigid retainer (70; 170; 270) consisting of a sleeve (82) engaged into the bore (38) and attached to the projection (29) of the hub (28) for holding the peripheral surface (48) of the resilient member (46) in compressive abutment against the associated shoulder (76), characterized in that the sleeve (82) terminates at its end opposite said resilient member (46) in a radial flange (96) which itself engages the end of the projection (29) of the hub (28) and carries locking means (100; 184, 186; 280) cooperating with said projection to hold the retainer in a fixed position.

2. A control valve according to claim 1, characterized in that the locking means include tabs (100 . . . 100$^N$; 184, 186; 276 . . . 276$^N$) adapted to snap into a corresponding groove (102) formed on the projection (29) adjacent its end.

## Patentansprüche

1. Steuerventil (44) für einen druckmittelbetätigten Motor, mit einem Gehäuse (12, 14), dessen Innenraum durch eine bewegbare Wandanordnung (18, 30) in eine mit einer ersten Strömungsmittelquelle verbundene erste volumenveränderliche Kammer (34) und eine zweite volumenveränderliche Kammer (36) unterteilt ist, einer mit der bewegbaren Wandanordnung verbundenen Nabe (28), die einen sich durch das Gehäuse erstrekkenden Vorsprung (29) mit einer darin gebildeten Bohrung (38) aufweist, und einem Steuerventil (44), das in der Bohrung angeordnet ist und in Abhängigkeit von einer auf ein Eingangsglied (56) ausgeübten Kraft die zweite Kammer (36) in einem ersten Betriebszustand mit der ersten Kammer (34) und in einem zweiten Betriebszustand mit einer zweiten Strömungsmittelquelle verbindet, wodurch eine an der bewegbaren Wandanordnung anliegende Druckdifferenz entsteht und eine Ausgangskraft erzeugt wird, wobei das Steuerventil (44) einen ortsfesten Sitz (75), einen beweglichen Sitz (60) und ein elastisches Teil (46) aufweist, von denen der ortsfeste Sitz in der Bohrung (38) gebildet ist, der bewegliche Sitz an einer Stirnfläche eines Kolbens (58) gebildet ist, der mit dem Eingangsglied (56) verbunden ist, und das elastische Teil versehen ist mit einer Umfangsfläche (48), die an einer Schulter (76) in der Bohrung (38) dichtend anliegt, einer Öffnung (50), durch die das Eingangsglied (56) ragt, und mindestens einer Rippe (52), die mit den Sitzen zusammenwirkt, um entweder den ersten oder den zweiten Betriebszustand herzustellen, wobei das Steuerventil (44) außerdem einen starren Halter (70; 170; 270) in Form einer Hülse (82) aufweist, die in die Bohrung (38) greift und an dem Vorsprung (29) der Nabe (28) befestigt ist, um die Umfangsfläche (48) des elastischen Teils (46) in Druckanlage mit der zugehörigen Schulter (76) zu halten, dadurch gekennzeichnet, daß die Hülse (82) an ihrem vom elastischen Teil (46) abgewandten Ende in einem radialen Flansch (96) endet, der seinerseits an dem Ende des Vorsprungs (29) der Nabe (28) angreift und Verriegelungsmittel (100; 184, 186; 280) trägt, die mit dem Vorsprung zusammenwirken, um den Halter in einer festgelegten Stellung zu halten.

2. Steuerventil nach Anspruch 1, dadurch gekennzeichnet, daß die Verriegelungsmittel Laschen (100 ... 100$^N$; 184, 186; 276 ... 276$^N$) aufweisen, die in eine entsprechende Nut (102) an dem Vorsprung (29) angrenzend an dessen Ende einschanppen können.

### Revendications

1. Valve de commande (44) destinée à être utilisée dans un moteur actionné par un fluide comprimé, comportant une enceinte (12, 14) dont la cavité intérieure est divisée par un ensemble de cloison mobile (18, 30) en une première chambre (34) à volume variable raccordée à une première source de fluide et une seconde chambre (36) à volume variable, un moyeu (28) raccordé au dit ensemble de cloison mobile et présentant une saillie (29) dans laquelle est prévu un alésage (38) s'étendant à travers l'enceinte, et une valve de commande (44) disposée dans le dit alésage et répondant à un effort appliqué à un organe d'entrée (56) pour raccorder la seconde chambre (36) à la première chambre (34) dans un premier mode de fonctionnement et à une seconde source de fluide dans un second mode de fonctionnement, ce qui engendre une pression différentielle de part et d'autre de l'ensemble de cloison mobile et ce qui produit un effort de sortie, la dite valve de commande (44) comprenant un siège fixe (75) formé à l'intérieur de l'alésage (38), un siège mobile (60) formé sur une face d'extrémité d'un plongeur (58) raccordé à l'organe d'entrée (56), et un élément élastique (46) présentant une surface périphérique (48) s'adaptant de façon étanche à un épaulement (76) ménagé dans l'alésage (38), une ouverture centrale (50) à travers laquelle passe l'organe d'entrée (56), et au moins une nervure (52) apte à coopérer avec les dits sièges pour établir soit le premier soit le second mode de fonctionnement, la dite valve de commande (44) comprenant en outre une cage (70; 170; 270) rigide constituée d'un manchon (82) engagé dans l'alésage (38) et attaché à la saillie (29) du moyeu (28) pour maintenir la surface périphérique (48) de l'élément élastique (46) en position comprimée contre l'épaulement (76) associé, caractérisée en ce qu'à son extrémité opposée au dit élément élastique (46), le manchon (82) se termine par une bride radiale (96) dans laquelle s'engage l'extrémité de la saillie (29) du moyen (27) et qui porte des moyens de verrouillage (100; 184, 186; 280) coopérant avec la dite saillie pour maintenir la cage dans une position fixe.

2. Valve de commande suivant la revendication 1, caractérisée en ce que les moyens de verrouillage comprennent des pattes (100, ... 100$^N$; 184, 186; 276, ... 276$^N$) pouvant s'engager élastiquement dans un saignée (102) correspondante taillée dans la saillie (29) au voisinage de son extrémité.

0 076 753

FIG. 2

FIG. 1

FIG. 3

FIG. 4

FIG. 5

1